# EUROPÄISCHE PATENTSCHRIFT

(11) **EP 3 909 432 B1**
(45) Veröffentlichungstag und Bekanntmachung des Hinweises auf die Patenterteilung: **11.12.2024**
(21) Anmeldenummer: 20174697.1
(22) Anmeldetag: 14.05.2020
(51) Int. Cl.: A23G 1/00, A23G 1/21, A23G 3/34, A23G 3/02

(54) **KALTSTEMPELVORRICHTUNG**
COLD STAMPING DEVICE
DISPOSITIF TAMPON À FROID

(43) Veröffentlichungstag der Anmeldung: 17.11.2021
(73) Patentinhaber: Bühler GmbH, 51580 Reichshof (DE)
(72) Erfinder: Vonlanthen, Richard, 8409 Winterthur (CH); Pack, Tanja, 51674 Wiehl (DE)
(74) Vertreter: Hepp Wenger Ryffel AG

(56) Entgegenhaltungen:
- EP-A1- 1 346 643
- EP-A1- 3 139 760
- EP-B1- 1 346 643
- EP-B1- 3 139 760
- DE-A1- 102004 056 375

## Beschreibung

Die Erfindung betrifft eine Kaltstempelvorrichtung zum Herstellen von geformten Verzehrgütern aus einer Lebensmittelmasse, insbesondere einer Fettmasse, vorzugsweise einer kakaohaltigen und/oder schokoladeartigen Fettmasse, ein Verfahren zur Inbetriebnahme und zum Betreiben einer Kaltstempelvorrichtung.

Schalenartig geformte Verzehrgüter werden zum Beispiel als Schokoladenhülsen für die Herstellung von Pralinen verwendet.

Schalenartige Verzehrgüter werden zum Beispiel in Hohlformen oder Alveolen gebildet, die typischerweise als Vertiefungen in einer Form, einem Formenblock oder einer Formenplatte ausgebildet sind. Diese Hohlformen oder Alveolen können mit einer oder mehreren fliessfähigen, bevorzugt temperierten, Lebensmittelmassen, insbesondere einer Fettmasse, befüllt werden. Die Innenfläche einer jeweiligen Alveole bestimmt dabei die Aussenfläche eines herzustellenden schalenartigen Verzehrgutes. Beispielsweise können Hohlkörper aus Schokoladenmasse geformt werden.

Beim Vergiessen der Schokoladenmasse in die Alveolen der Formen hat sie bevorzugt eine Temperatur von ca. 28 °C. Damit die Schokolade nach dem Eintauchen der Stempel schnell verfestigt und formstabil wird, muss die Wärme aus der Schokoladenmasse abgeführt werden. Dies geschieht in der erfindungsgemäßen Kaltstempeleinheit.

Bei der Herstellung von geformten Verzehrgütern aus einer Lebensmittelmasse werden in der Regel die Alveolen oder Giessformen mit einer Lebensmittelmasse, insbesondere einer Fettmasse im fliessfähigen, bevorzugt temperierten Zustand gefüllt, woraufhin in die gefüllten Giessformen abgekühlte Stempel geführt werden, welche die Fettmasse formen und zumindest teilweise erstarren lassen, insbesondere zu einer Hohlform oder Hülse. Anschliessend werden die Stempel von der Masse weggeführt, wonach die geformte und erstarrte Fettmasse gegebenenfalls nach weiteren Bearbeitungsschritten aus den Giessformen entfernt wird. Diese Schritte können an den entleerten Giessformen erneut durchgeführt werden.

Die schalenartig geformten Verzehrgüter, insbesondere Hohlformen, können weiterverarbeitet werden, zum Beispiel gefüllt und/oder gedeckelt oder zu einem Hohlkörper zusammengefügt werden.

Hierfür verwendete Kaltstempelvorrichtungen umfassen eine Vielzahl von kühlbaren Stempeln, wie sie etwa aus EP0981280 A1 bekannt sind. Die Stempel weisen in der Regel Kanäle auf, welche von einem Temperiermedium durchströmt werden. Die Stempel sind bevorzugt aus wärmeleitfähigem Material hergestellt und der Taupunkt der das Verzehrgut umgebenden Atmosphäre wird unter der Temperatur der Stempel gehalten, damit sich an den Stempeln kein Kondensat bildet. Dies wird in der Regel dadurch erreicht, dass der Umgebung trockene Luft zugeführt wird.

Die Stempel sind zumeist auf einer Grundplatte angeordnete, welche den Zu- und den Ablauf für das Temperiermedium enthält. Wenn die Stempel aus einer Arbeitsposition, in welcher sie bereit zum Eintauchen in die Giessform sind, entfernt werden sollen, muss die Grundplatte von der Temperiermediumversorgung abgekoppelt werden. Die kann notwendig werden, wenn die Stempel gereinigt, gewartet oder gewechselt werden müssen. Insbesondere, wenn die Stempel selbst von Temperiermedium durchströmt werden, kann dies einen hohen zeitlichen und apparativen Aufwand erfordern.

Aus der DE 102004056375 A1 ist eine Einrichtung zur formgebenden Erstarrung warm- oder heissflüssiger Lebensmittelmassen bekannt, die mit einer Dauerkühleinrichtung und einer Zusatzkühleinrichtung ausgestattet ist. Die auf einer Platte angeordneten Stempel können ausgewechselt werden. Die Zusatzkühlung erfolgt elektrisch und wird nur beim Eintauchen der Stempel in die zu formende Masse hinzugeschaltet. Die Kühlung ist energieaufwändig und es muss bei jedem Stempelvorgang abgewartet werden, bis die Stempel die gewünschte Temperatur angenommen haben.

Die EP1346643 A1 betrifft ein Verfahren zur Herstellung von Schokoladenhülsen, wobei Kolben mit Pressflächen in entsprechenden Formen getaucht werden. Die Temperatur der Pressflächen wird während des Pressens unterhalb der Erstarrungstemperatur der Schokoladenmasse gehalten. Die Kolben sind in einer Halte- und Kühlvorrichtung angeordnet, die von Kühlflüssigkeit durchströmte Kühlkanäle aufweist.

Die EP3139760 A1 zeigt eine Stempelplatte und eine Vorrichtung zur Herstellung schalenartig geformter Verzehrgüter. Die Stempelplatte umfasst mindestens einen temperierbaren Stempel, der bei bestimmungsgemässem Gebrauch in eine mit dem Stempel korrespondierende Alveole eintauchbar ist.

Der Erfindung liegt die Aufgabe zugrunde, die Nachteile des Standes der Technik zu überwinden und insbesondere eine Kaltstempelvorrichtung, ein Verfahren zur Inbetriebnahme und zum Betreiben einer Kaltstempelvorrichtung zur Verfügung zu stellen, die ein effizientes Temperieren der Stempel und einen gute Bedienbarkeit erlauben.

Die Aufgabe wird gelöst durch eine Kaltstempelvorrichtung mit den Merkmalen gemäss Anspruch 1.

Die Kaltstempelvorrichtung zum Herstellen von geformten Verzehrgütern aus einer Lebensmittelmasse, insbesondere einer Fettmasse, vorzugsweise einer kakaohaltigen und/oder schokoladeartigen Fettmasse, umfasst wenigstens eine Stempelplatte mit mindestens einem Stempel.

Die Stempelplatte umfasst bevorzugt eine Grundplatte, auf welcher der mindestens eine Stempel angeordnet ist.

Die Kaltstempelvorrichtung umfasst ausserdem wenigstens einen Thermoblock, der einen Grundkörper mit mindestens einer Kammer zum Durchführen eines, insbesondere flüssigen, Temperiermediums aufweist. Bei dem Temperiermedium kann es sich um Pekasol 2000, Dynalen HC30 oder D-Limonen handeln. Der Thermoblock umfasst mindestens eine Wärmeaustauschfläche.

Unter Wärmeaustausch wird hierbei ein Temperaturausgleich verstanden. Die Wärmeaustauschfläche dient bevorzugt zum Kühlen der Stempelplatte, also zur Aufnahme von Wärme.

Der Thermoblock besitzt mindestens eine Einlauföffnung und mindestens eine Auslassöffnung, welche mit der Kammer fluidleitend verbunden sind.

Die Stempelplatte umfasst eine, bevorzugt ebene, Kontaktfläche, die in wärmeleitfähigen Kontakt mit der Wärmeaustauschfläche des Thermoblocks bringbar ist.

Der Grundkörper umfasst, insbesondere in der Umgebung der Wärmeaustauschfläche, gut wärmeleitfähiges Material, beispielweise ein Metall, bevorzugt Aluminium. Unter einem gut wärmeleitfähigen Material wird im Rahmen dieser Erfindung ein Material mit einer Wärmeleitfähigkeit von 170 bis 220W/mK oder besser verstanden.

Insbesondere sind die Wärmeaustauschfläche des Thermoblocks und die Kontaktfläche so ausgebildet, dass mindestens 60%, bevorzugt mindestens 80%, der Kontaktfläche an der Wärmaustuschfläche anliegt. Mindestens 60%, bevorzugt mindestens 80%, der Kontaktfläche ist bevorzugt komplementär zu einem entsprechenden Teil der Wärmeaustauschfläche ausgebildet. Bevorzugt ist die Wärmeaustauschfläche ebenfalls eben.

Die Wärmeaustauschfläche kann auch leicht konvex oder bombiert sein, damit das Zentrum der Fläche besonders gut an der, bevorzugt ebenen, Kontaktfläche anliegen kann und über die gesamte Fläche einen möglichst homogenen Wärmeaustausch zu erreichen.

Kontaktfläche und Wärmeaustauschfläche erstrecken sich bevorzugt in einer Ebene senkrecht zur Stempelrichtung. Die Stempelrichtung ist die Richtung, in welcher der mindestens eine Stempel der Stempelplatte relativ zu einer Alveole bewegt wird.

Die Kaltstempelvorrichtung ist bevorzugt derart gestaltet, dass der Temperaturaustausch unmittelbar zwischen der Wärmeaustauschfläche und der Kontaktfläche erfolgen kann und kein weiteres aktives Temperiermittel, wie eine elektrisch betriebene Zusatzkühleinrichtung, zwischen Wärmeaustauschfläche und Kontaktfläche anzuordnen ist.

Die Kammer umfasst mindestens einen Zulaufkanal und mindestens einen Rückführkanal, die fluidleitend miteinander verbunden sind. Der Zulaufkanal ist näher an der Wärmeaustauschfläche angeordnet als der Rückführkanal, wobei die Kammer so angeordnet ist, dass das Temperiermedium auf dem Weg von der Einlauföffnung zu der Auslassöffnung zunächst durch den Zulaufkanal und dann durch den Rückführkanal strömt.

In einer alternativen Ausführung können Einlauföffnung und Auslassöffnung zwar nah beieinander angeordnet sein, aber Zulaufkanal und Rückführkanal im Wesentlichen den gleichen Abstand von der Wärmeaustauschfläche aufweisen.

Zumindest der Zulaufkanal ist bevorzugt in einem geringen Abstand, das heisst, in einem Abstand von kleiner als 20mm, bevorzugt kleiner 10mm, zu der Wärmeaustauschfläche angeordnet.

Das Temperiermedium, insbesondere ein Kühlfluid, zum Beispiel eine Kühlflüssigkeit, kann durch die Einlauföffnung und den Zulaufkanal oder die Zulaufkanäle strömen. Über den Temperaturaustausch mit dem Grundkörper und der Wärmeaustauschfläche kann die Wärme auf kurzem Weg mit der Kontaktfläche ausgetauscht werden.

Das Temperiermedium nimmt Wärme aus dem Grundkörper auf und daher ist das Temperiermedium in dem Rückführkanal wärmer als im Zulaufkanal. Da zumindest die Zulaufkanäle in geringem Abstand von der Wärmeaustauschfläche angeordnet sind, kann die von der Kontaktfläche abgestrahlte Wärme gut von dem Temperiermedium aufgenommen werden. Diese Kühlung ist besonders effektiv.

Das im Rücklaufkanal befindliche Temperiermedium, das noch kühler als die Umgebungstemperatur sein kann, kann auch zur Temperierung beitragen.

In einer vorteilhaften Ausführung der Kaltstempelvorrichtung sind der Zulaufkanal und der Rückführkanal im Wesentlichen parallel zueinander und/oder im Wesentlichen parallel zur Wärmaustauschfläche angeordnet.

Die führt zu einer möglichst gleichmässigen Temperierung des Grundkörpers über die Fläche quer zur Stempelrichtung und daher zu einer gleichmässigen Temperierung der Wärmeaustauschfläche.

Die Einlauföffnung und die Auslassöffnung für das Temperiermedium können nah beieinander angeordnet sei, zum Beispiel auf einer ersten Seite des Grundkörpers, sodass das Temperiermedium zunächst über den mindestens einen Zulaufkanal von der ersten Seite zu der der ersten Seite gegenüberliegenden Seite des Grundkörpers geführt wird und über den mindestens einen Rücklaufkanal wieder zurück zur ersten Seite.

In einer bevorzugten Ausführung der Kaltstempelvorrichtung ist an der von der Wärmeaustauschfläche wegweisenden Seite der Kammer, insbesondere an der von der Wärmeaustauschfläche wegweisenden Seite des Rückführkanals, eine Isolierung angeordnet.

Es findet daher bevorzugt ein Temperaturaustausch mit der Kontaktfläche statt. Das Temperiermedium, insbesondere das im Rücklaufkanal zurücklaufende Temperiermedium, nimmt bevorzugt keine oder zumindest nur wenig Wärme aus der Umgebung auf, sondern in erster Linie aus der Richtung der Kontaktfläche.

Die Isolierung ist bevorzugt als Schicht parallel zur Wärmeaustauchfläche ausgebildet. Die Isolierung kann einen Kunststoff umfassen oder aus einem Kunststoff bestehen, wobei es sich bei dem Kunststoff insbesondere um PE500 handelt.

Für die Isolierung können auch Hohlräume im Thermoblock vorgesehen sein. Die Hohlräume können konstruktiv mit den fluidführenden Kanälen verbunden sein, und sind bevorzugt mit Isolationsmaterial, zum Beispiel einem Kunststoff, gefüllt, um "tote" Fluidtaschen zu vermeiden.

Der Zulaufkanal umfasst bevorzugt eine Mehrzahl von Kanälen, die in geringer Entfernung von der Wärmeaustauchfläche entlang der Wärmeaustauschfläche verlaufen.

Der Zulaufkanal kann auch aus einem Kanal bestehen, der mäanderförmig im Grundkörper angeordnet ist.

Zylinderförmige Kanäle in dem Grundkörper des Thermoblocks können zumindest teilweise den Zulaufkanal bilden.

Der Zulaufkanal kann ausserdem eine Verteilerkammer umfassten, die das Temperiermedium von der Einlauföffnung auf die, bevorzugt zylinderförmigen, Kanäle verteilt.

Die Kanäle können in den Thermoblock gefräst sein und beispielsweise eine rechteckige oder teilkreisförmige Querschnittsfläche aufweisen.

Die zylinderförmigen Kanäle sind insbesondere parallel zueinander und zu der Wärmeaustauschfläche angeordnet. Bevorzugt sind die zylinderförmigen Kanäle gleich weit voneinander beabstandet.

Alternativ weisen die, bevorzugt zylinderförmigen, Kanäle unterschiedliche Abstände voneinander auf, wobei der jeweilige gegenseitige Abstand von der Entfernung der Kanäle vom Rand der Wärmeaustauschfläche abhängen kann. So muss z.B. in der Mitte der Stempelplatte mehr Wärme abgeführt werden, als an den Randregionen.

Auf diese Weise wird ein gleichmässiger Temperaturaustausch zwischen Temperiermedium und Wärmeaustauschfläche ermöglicht.

Die zylinderförmige Kanäle weisen bevorzugt einen Durchmesser von 4mm bis 20mm, bevorzugt 4mm bis 8mm, weiter bevorzugt zwischen 6mm und 7 mm, und einen Abstand von 6mm bis 40mm, bevorzugt 20mm bis 35mm, weiter bevorzugt zwischen 35mm und 30mm, auf.

Die Länge der Kanäle ist an die Länge oder Breite des Grundkörpers und/oder der Wärmeaustauschfläche angepasst und kann 40-1200cm betragen. Der Volumenstrom des Temperiermediums kann zwischen 10 und 15m³/h, bevorzugt etwa 13m³/h, betragen.

Mit diesen Abmessungen ist wird eine effektiver Temperaturaustausch ermöglicht.

In einer vorteilhaften Ausführung ist der Grundkörper des Thermoblocks aus Platten aufgebaut. Dabei umfasst insbesondere eine erste Platte die Wärmeaustauschfläche.

Die Platten schliessen zumindest Teile der Kammer ein, insbesondere zylinderförmige Zulaufkanäle.

Die Platten können an mindestens einer Plattenseite Ausnehmungen aufweisen, welche zusammen mit Ausnehmungen einer benachbarten Platte einen oder mehrere Kanäle bilden, insbesondere Zulaufkanäle.

Zwischen den Platten können Abstandselemente angeordnet sein, sodass Temperiermedium zwischen zwei voneinander beabstandeten Platten geführt werden kann, insbesondere in dem Rücklaufkanal. Die Platten können zum Durchleiten von Temperiermedium Öffnungen aufweisen, beispielsweise zum Durchleiten des Temperiermediums von der Einlauföffnung in eine Verteilerkammer und/oder von dem Zulaufkanal in die Rückführkanal.

Zumindest ein Teil der Platten ist bevorzugt aus Metall gefertigt, besteht zum Beispiel aus Aluminium und/oder enthält Aluminium.

Der Thermoblock weist bevorzugt möglichst wenige horizontale Trennebenen auf, um der Gefahr der Undichtigkeit entgegenzuwirken. Bevorzugt weist der Thermoblock eine Trennebene auf, in welcher der mindestens eine Zulaufkanal angeordnet ist, und eine Trennebene, in welcher der mindestens eine Rücklaufkanal angeordnet ist.

Eine Isolierung kann auf einer Platte angeordnet sein oder selbst eine Platte des Grundkörpers bilden. Eine Isolierplatte kann zwischen benachbarten Platten eingeklemmt sein.

Vorteilhafterweise umfasst die Kaltstempelvorrichtung weiter eine Pumpvorrichtung zum Fördern von Temperiermedium.

Bei der Pumpe kann es sich um eine vertikale, mehrstufige Kreiselpumpe handeln. Die Pumpe erbringt bevorzugt eine Pumpleistung zwischen 5 und 10 kW, weiter bevorzugt 7,5kW, wobei zum Beispiel bei einem Druckverlust von 4bar ein Volumenstrom von 13m³/h erreicht wird.

In einer bevorzugten Ausführung der Kaltstempelvorrichtung ist die Stempelplatte aus einer Wartungsposition, in welcher die Stempelplatte nicht in wärmeleitfähigem Kontakt mit dem Thermoblock steht, in eine Betriebsposition, in welcher die Stempelplatte in wärmeleitfähigem Kontakt mit dem Thermoblock steht, bewegbar. Die Stempelplatte ist ebenso aus der Betriebsposition in die Wartungsposition bewegbar.

Insbesondere ist die Stempelplatte auf Einschubleisten schiebbar.

Der Thermoblock kann dazu, bevorzugt zwei, Einschubleisten aufweisen, die parallel zueinander und parallel zur Wärmeabgabefläche verlaufen. Die Randbereiche der Stempelplatte können auf Ablageflächen der Einschubleisten, die zum Grundkörper weisen, aufgelegt werden. Die Stempelplatte kann dann auf den Einschubleisten hin- und hergeschoben werden. Die Stempelplatte kann unter den Thermoblock geschoben werden, bis die Kontaktfläche und die Wärmeaustauschfläche den gewünschten Überlapp aufweisen.

Bevorzugt sind die Einschubleisten so angebracht, dass sie ein Bewegungsspiel in einer Richtung senkrecht zur Wärmeabgabefläche aufweisen. Die Einschubleisten können über Führungsstangen an dem Grundkörper des Thermoblocks befestigt sein. Die Einschubleisten sind an den Grundköper heranschiebbar und die auf den Auflageflächen aufliegende Randbereiche einer Stempelplatte können zwischen der Einschubleiste und dem Grundkörper eingeklemmt werden, sodass die Kontaktfläche und die Wärmeaustauschfläche aneinander liegen.

Die Führungsstangen sorgen dafür, dass die Einschubleisten nicht verkanten und ihre Ausrichtung gegenüber der Wärmeabgabefläche beibehalten. Auf diese Weise behält auch die Stempelplatte beim Heranziehen der Einschubleisten an den Grundkörper oder beim Lösen der Einschubleisten vom Grundkörper ihre Ausrichtung.

Bevorzugt ist die Stempelplatte in der Betriebsposition mit Befestigungsmitteln, insbesondere Spannmuttern, fixierbar.

Die Spannmuttern sind bevorzugt an dem Thermoblock angeordnet und wirken mit Befestigungselementen zusammen, über welche die Stempelplatte an dem Thermoblock fixiert werden kann.

Die Befestigungselemente können an der Stempelplatte angebracht sein.

Bevorzugt sind die Befestigungselemente an Einschubleisten angebracht. Die Spannmuttern können mit an Einschubleisten angeordneten Schraubenelementen zusammenwirken. An den Einschubleisten können beispielsweise Gewindestangen befestigt sein, die durch Ausnehmungen in dem Thermoblock führen und in Spannmuttern gelagert sind.

Die Spannmuttern sind bevorzugt von der der Wärmaustauschfläche gegenüberliegenden Seite des Grundkörpers bedienbar.

Bei den Spannmuttern handelt es sich insbesondere um Kraftspannmuttern, die ein Planetengetriebe aufweisen. Diese können sehr einfach von Hand angezogen und gelöst werden.

Bevorzugt sind pro Stempelplatte zwei Einschubleisten und pro Einschubleiste zwei Spannmuttern vorgesehen, so dass eine Stempelplatte mit vier Spannmuttern fixierbar ist.

An einem Thermoblock kann ein Einschubleistenpaar zur Aufnahme einer Stempelplatte angebracht sein oder es können mehrere Paare von Einschubleisten zur Aufnahmen von mehreren Stempelplatten vorgesehen sein.

Der Thermoblock kann dazu eine Wärmeaustauschfläche pro vorgesehener Stempelplatte oder eine gemeinsame Wärmeaustauschfläche für alle Stempelplatten aufweisen.

Zwischen Kontaktfläche und Thermoblock kann eine Wärmeleitplatte angeordnet sein.

Diese kann an der Stempelplatte, insbesondere an der Kontaktfläche befestigt sein.

Die Wärmeleitplatte kann als Folie ausgebildet sein und Unebenheiten der Kontaktfläche und/oder der Wärmeaustauschfläche ausgleichen. Somit kommt es nur zu einem minimalen Lufteinschluss zwischen Kontaktfläche und Wärmeaustauschfläche, der den Temperaturausgleich zwischen den Flächen verringern könnte.

Die Wärmeleitplatte kann aus Kupfer bestehen oder Kupfer umfassen.

In einer vorteilhaften Ausführung der Kaltstempelvorrichtung ist die Stempelplatte, zumindest eine Grundplatte und der mindestens eine Stempel, einstückig und bevorzugt aus Metall, zum Beispiel Aluminium, gefertigt.

Bevorzugt sind die Stempel aus einem Plattenrohling herausgefräst.

An der von der Kontaktfläche wegweisenden Seite der Stempelplatte können neben, bevorzugt einstückig mit einer Grundplatte ausgebildete, Stempeln auch noch Zentrierstifte und Anschlagelemente angebracht sein. Diese sorgen für eine präzise Ausrichtung der Stempel in Bezug auf eine Form.

In einer vorteilhaften Ausgestaltung der Kaltstempelvorrichtung umfasst diese eine Mehrzahl von Stempelplatten, bevorzugt mit unterschiedlichen Topographien für verschiedene zu erzielenden Formen und/oder mit unterschiedlich vielen Stempeln, von denen jeweils eine in eine Betriebsposition bringbar ist.

Die Kaltstempelvorrichtung ist somit als Set ausgebildet, aus welchem jeweils eine Stempelplatte mit einer gewünschten Topographie gewählt werden kann. Alle Stempelplatten des Sets passen beispielsweise in die Einschubleisten des Thermoblocks, bewirken aber unterschiedliche Stempelmuster.

Die Kaltstempelvorrichtung kann mehrere in einem Rahmen angeordnete Thermoblöcke umfassen, die jeweils eine Aufnahme für eine Stempelplatte oder mehrere Aufnahmen für mehrere Stempelplatten umfassen.

Die Aufgabe wird gelöst durch eine Anlage mit den Merkmalen gemäss Anspruch 12.

Die Anlage zum Herstellen von geformten Verzehrgütern aus einer Lebensmittelmasse, insbesondere einer Fettmasse, vorzugsweise einer kakaohaltigen und/oder schokoladeartigen Fettmasse, umfasst eine Kaltstempelvorrichtung wie oben beschrieben und eine Aufnahme für mindestens eine Form mit mindestens einer Alveole zum Einfüllen von fliessfähiger Lebensmittelmasse.

Die Aufnahme kann mittels eines Transportbandes unter dem Thermoblock hergeführt werden.

Die Anlage umfasst bevorzugt eine Hubvorrichtung, mittels der die Kaltstempelvorrichtung in Richtung Aufnahme und/oder die Aufnahme in Richtung Kaltstempelvorrichtung bewegbar ist.

Die Anlage kann zudem eine Translationsvorrichtung umfassen, mit welcher die Kaltstempelvorrichtung zusammen mit der Aufnahme quer zur Stempelrichtung bewegbar ist.

Die Aufgabe wird gelöst durch Verfahren zur Inbetriebnahme einer Kaltstempelvorrichtung mit den Merkmalen gemäss Anspruch 13.

Die Kaltstempelvorrichtung umfasst mindestens eine Stempelplatte mit Kontaktfläche und mindestens einen Thermoblock mit mindestens einer Wärmeaustauschfläche, insbesondere wie oben beschrieben.

Das Verfahren umfasst die folgenden Schritte. Zunächst wird die Stempelplatte in eine an dem Thermoblock angebrachten Aufnahme eingeführt. Insbesondere umfasst die Aufnahme an dem Thermoblock befestigte Einschubleisten.

Insbesondere werden Randbereiche der Stempelplatte auf Auflageflächen der Einschubleisten gelegt und die Stempelplatte auf den Einschubleisten geschoben.

Dann wird ein wärmeleitfähiger Kontakt zwischen der Kontaktfläche und der Wärmeaustauschfläche hergestellt.

Bevorzugt wird die Stempelplatte mit Spannmuttern an dem Thermoblock fixiert.

Die Spannmuttern können insbesondere mit an Einschubleisten angebrachten Schraubenelementen zusammenwirken, derart, dass die Einschubleisten an den Grundkörper des Thermoblocks herangezogen werden und die Stempelplatte zwischen den Einschubleisten und dem Grundkörper einklemmt wird.

Die Aufgabe wird gelöst durch Verfahren zum Betreiben einer Kaltstempelvorrichtung mit den Merkmalen gemäss Anspruch 15.

Die Kaltstempelvorrichtung umfasst mindestens eine Stempelplatte mit einer Kontaktfläche und mindestens einen Thermoblock mit mindestens einer Kammer zum Durchleiten von Temperiermedium und mindestens einer Wärmeaustauschfläche, wie oben beschrieben.

Das Verfahren umfasst die folgenden Schritte.

Ein Temperiermedium, insbesondere eine Temperierflüssigkeit, wird durch die mindestens eine Kammer geführt, wobei das Temperiermedium zunächst durch mindestens einen Zulaufkanal der Kammer geführt wird und anschliessend durch mindestens einen Rückführkanal der Kammer, wobei der Zulaufkanal in einem Abstand zu der Wärmeaustauschfläche angeordnet ist, der kleiner ist als der Abstand des Rückführkanal von der Wärmeaustauschfläche.

Alternativ kann der Zulaufkanal in dem gleichen Abstand zu der Wärmeaustauschfläche angeordnet sein wie der Rückführkanal.

Bevorzugt ist zumindest der Zulaufkanal in einem geringen Abstand, das heisst, in einem Abstand von kleiner als 20mm, bevorzugt kleiner 10mm, zu der Wärmeaustauschfläche angeordnet.

Wenn die Kontaktfläche der Stempelplatte mit der Wärmeaustauschplatte in wärmeleitendem Kontakt steht, erfolgt ein Austausch von Wärme zwischen der Wärmeaustauschfläche und der Kontaktfläche. Dabei kann die Wärmeaustauschplatte Wärme von der Stempelplatte aufnehmen und an das Temperiermedium abgeben. Den Stempeln wird so Wärme entzogen, das heisst, die Stempel werden gekühlt.

Die Wärme wird über das Temperiermedium aus der Kaltstempelvorrichtung herausgeführt. Das nah an der Wärmeaustauschfläche entlang fliessende Temperiermedium, das frisch in die Kaltstempelvorrichtung hereinfliesst, hat den grössten Temperaturunterschied zur Stempelplatte und kann daher am besten Wärme aufnehmen. Solange noch ein Temperaturunterschied zur Stempelplatte besteht kann auch das zurückfliessende Temperiermedium noch Wärme aufnehmen.

Bevorzugt ist die Kammer des Thermoblocks gegenüber der von der Wärmeaustauschfläche abgewandten Seite mit einer Isolierung abgeschirmt, sodass ein Wärmeaustausch vorwiegend über die Wärmeaustauschfläche und mit der Stempelplatte erfolgt und nicht mit der übrigen Umgebung.

Die Erfindung wird nachfolgend in Ausführungsbeispielen anhand von Zeichnungen erläutert.

Es zeigen
- Figur 1: eine schematische Darstellung einer Kaltstempelvorrichtung in Schnittdarstellung;
- Figur 2: eine schematische Darstellung eine Anlage mit der Kaltstempelanlage in perspektivischer Darstellung;
- Figur 3: eine schematische Darstellung der Kaltstempelvorrichtung in einer perspektivischer Darstellung;
- Figur 4: eine schematische Darstellung der Kaltstempelvorrichtung in einer weiteren perspektivischer Darstellung;
- Figur 5: eine schematische Darstellung der Kaltstempelvorrichtung in einer weiteren Schnittdarstellung;
- Figur 6: eine schematische Darstellung der Kaltstempelvorrichtung in einer weiteren Schnittdarstellung;
- Figur 7: eine schematische Darstellung der Kaltstempelvorrichtung in einer perspektivischer Darstellung mit Schnitt;
- Figur 8: ein Detail aus Figur 7;
- Figur 9: Flusslinien des Temperiermediums in einer perspektivischen Darstellung der Kaltstempelvorrichtung.

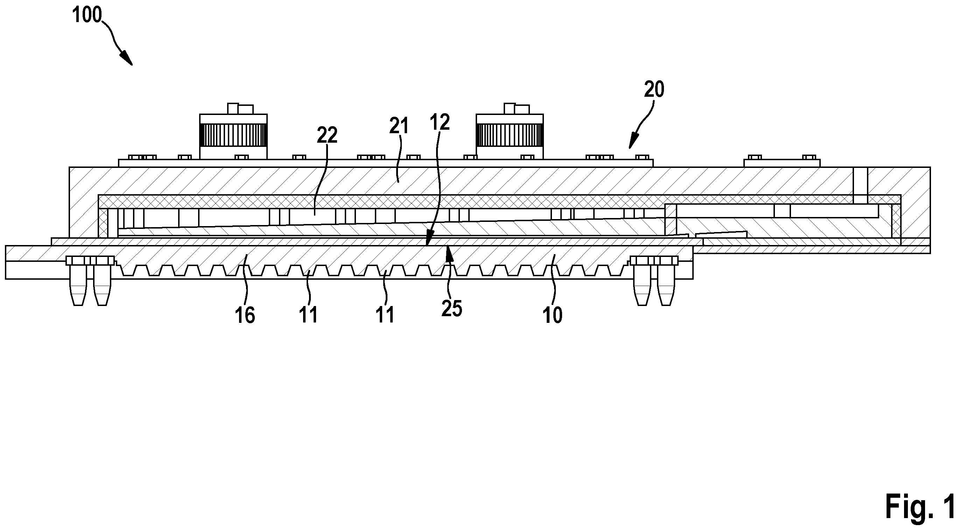

Figur 1 zeigt eine schematische Darstellung einer Kaltstempelvorrichtung 100 in Schnittdarstellung.

Die Kaltstempelvorrichtung 100 umfasst eine Stempelplatte 10 mit einer Grundplatte 16 und einer Vielzahl von Stempeln 11. Die von den Stempeln wegweisende Oberfläche der Stempelplatte 10 ist als eine ebene Kontaktfläche 12 ausgebildet. Diese steht mit einer ebenfalls ebenen oder flachen Wärmeaustauschfläche 25 eines Thermoblocks 20 in wärmeleitendem Kontakt.

Der Thermoblock 20 besitzt einen Grundkörper 21 mit mindestens einer Kammer 22 zum Durchführen eines Temperiermediums. Das Temperiermedium ist bevorzugt flüssig, z.B. handelt es sich um ein Pekasol 2000, Dynalen HC30 oder D-Limonen.

Der Thermoblock 20 weist eine ebene bzw. flache Wärmeaustauschfläche 25 auf, die eine äußere Oberfläche des Thermoblocks 20 bildet, welche zu der Stempelplatte 10 weist.

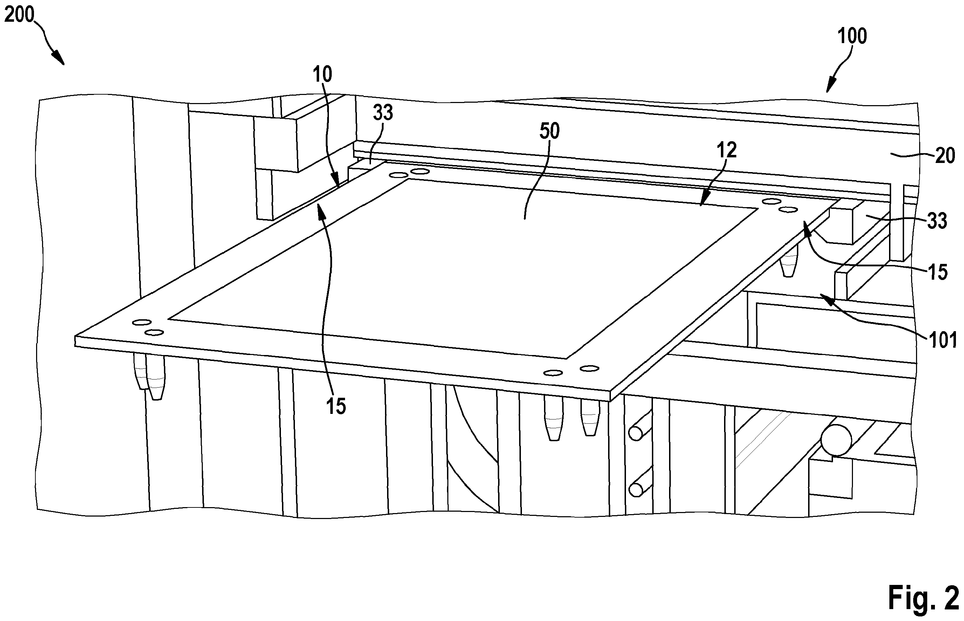

Figur 2 zeigt eine schematische Darstellung eine Anlage 200 mit einer Kaltstempelanlage 100 in perspektivischer Darstellung.

Der Thermoblock 20 weist Einschubleisten 33 auf.

In Figur 2 befindet sich die Stempelplatte 10 in einer Wartungsposition, in welcher die Stempelplatte 10 nicht in wärmeleitfähigem Kontakt mit dem Thermoblock 20 steht.

Von dieser Wartungsposition aus kann die Stempelplatte 10 in eine Betriebsposition gebracht werden, in welcher die Stempelplatte 10 in wärmeleitfähigem Kontakt mit dem Thermoblock 20 steht.

Randbereiche 15 der Stempelplatte 10 liegen auf Einschubleisten 33 des Thermoblocks 20 auf. Die Stempelplatte 10 kann auf den Einschubleisten 33 unter den Thermoblock 20 geschoben werden, sodass die Kontaktfläche 12 der Stempelplatte 10 benachbart zu der Wärmeaustauschfläche 25 (siehe zum Beispiel Figur 1) des Thermoblocks 20 angeordnet ist.

An der Kontaktfläche 12 der Stempelplatte 10 ist eine Wärmeleitplatte 50 angeordnet. In der Betriebsposition ist die Wärmeleitplatte 50 zwischen Kontaktfläche 12 und Wärmeaustauschfläche 25 (siehe Figur 1) angeordnet, sodass die Wärmeleitplatte 50 sowohl an der Kontaktfläche 12 als auch an der Wärmeaustauschfläche 25 anliegt.

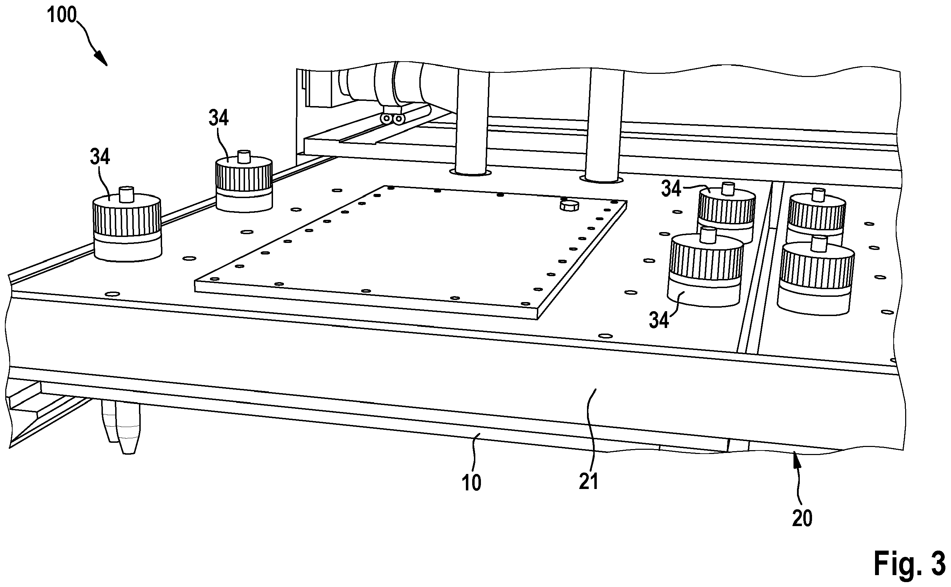

Die Kontaktfläche 12 kann eine kleinere Fläche aufweisen als die Wärmeaustauschfläche 25, sodass sich die Stempelplatte 10 in der Betriebsposition komplett unterhalb der Wärmeaustauschfläche 25 des Thermoblocks 20 befinden kann (siehe zum Beispiel Figur 3). Die Kontaktfläche 12 wird dann in Draufsicht komplett von der Wärmeaustauschfläche 25 überlappt.

Unterhalb des Thermoblocks 20 und der Stempelplatte 10 befindet sich eine Aufnahme 101 für mindestens eine Form mit mindestens einer Alveole zum Einfüllen von fliessfähiger Lebensmittelmasse. Die Aufnahme 101 und die Stempelplatte 10 können aufeinander zubewegt werden, so dass die Stempel 11 (siehe Figur 1) in die Alveolen der Form (nicht explizit gezeigt) eintauchen können und eine darin befindliche Masse formen.

Die Aufnahme 101 kann ein Band oder eine Bearbeitungsfläche sein, die unterhalb der Kaltstempelvorrichtung angeordnet ist.

Figur 3 zeigt eine schematische Darstellung einer Kaltstempelvorrichtung 100 in einer perspektivischen Darstellung.

Wenn die Stempelplatte 10 soweit unter den Grundkörper 21 des Thermoblocks 20 geschoben ist, dass die Wärmeaustauschfläche 25 und die Kontaktfläche 12 (siehe zum Beispiel Figur 1) miteinander korrespondieren, hindert ein nicht gezeigter Anschlag die Stempelplatte 10 daran, über den Rand des Thermoblocks 20 hinaus geschoben zu werden.

Die Stempelplatte 10 wird mit vier Kraftspannmuttern 34 an den Grundkörper 21 des Thermoblocks 20 herangezogen und daran fixiert.

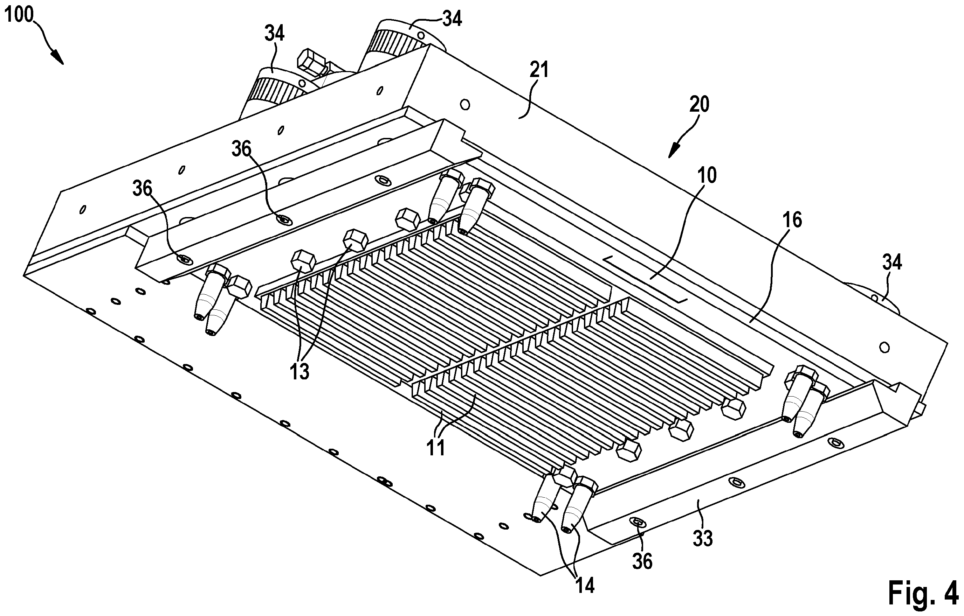

Figur 4 zeigt eine schematische Darstellung einer Kaltstempelvorrichtung 100 in einer weiteren perspektivischer Darstellung mit Blick auf die Stempel 11.

Die Stempelplatte 10 umfasst eine Vielzahl von Stempeln 11, die sich von einer Grundplatte 16 wegerstrecken. An der Stempelplatte 10 sind ausserdem Anschlagelemente 13 und Zentrierstifte 14 angeordnet, die sich ebenfalls von der Grundplatte 16 wegerstrecken.

Die Zentrierstifte 14 kontaktieren beim Stempeln die Aussenkanten der Formen (nicht in den Figuren gezeigt) und sorgen für eine präzise gegenseitige Ausrichtung von Stempelplatte 10 und Form. Die Anschlagelemente 13 liegen nach einer Annäherung von Stempelplatte 10 und Form an der Form, im Bereich der Flächen zwischen den Alveolen oder in einem Bereich um die Alveolen herum, an. Die Anschlagelemente 13 können einerseits die Form in eine ebene Position drücken und/oder sorgen andererseits für einen definierten Abstand zwischen Stempelplatte und Form, sodass insbesondere überschüssiges Material gezielt aus den Alveolen herausströmt und später abgezogen werden kann.

Die Stempelplatte 10 befindet sich gemäss Figur 4 in Betriebsposition, also unterhalb des Grundkörpers 21 des Thermoblocks 20.

Die Stempelplatte 10 liegt auf zwei Einschubleisten 33, die mit Führungsstangen 36 an dem Grundkörper 21 befestigt sind.

Wenn die Einschubleisten 33 mittels Kraftspannmuttern 34 an den Grundkörper 21 herangezogen sind, steht die Kontaktfläche 12 der Stempelplatte in wärmleitfähigem Kontakt mit der Wärmeaustauschfläche 25 (siehe Figur 1).

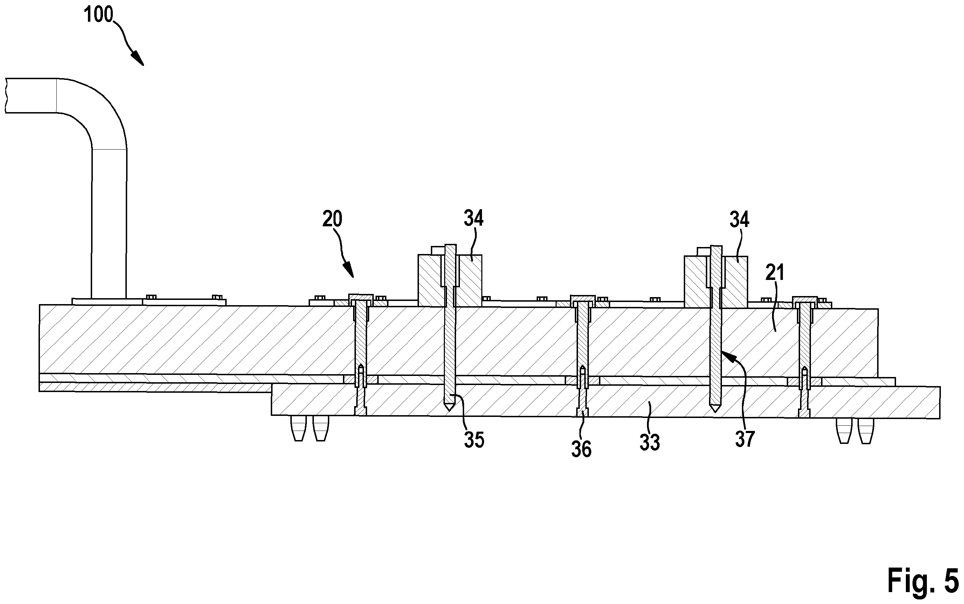

Figur 5 zeigt eine schematische Darstellung einer Kaltstempelvorrichtung 100 in einer weiteren Schnittdarstellung.

Die Einschubleisten 33 sind mit Führungsstangen 36 an dem Grundkörper 21 des Thermoblocks 20 befestigt. Gleichzeitig sind an den Einschubleisten Schraubenelemente in Form von Gewindestangen 35 angebracht. Diese führen durch Öffnungen 37 in dem Grundkörper 21 und wirken mit Kraftspannmuttern 34 zusammen. Über die Kraftspannmuttern 34 werden die Einschubleisten 33 an den Grundkörper 21 herangezogen, wobei die Führungsstangen 36 dafür sorgen, dass die Einschubleisten 33 nicht verkanten. Die Randbereiche 15 (siehe Figur 2) der Stempelplatte 10 werden mit den Einschubleisten an den Grundkörper 21 herangezogen und zwischen den Einschubleisten 33 und dem Grundkörper 21 eingeklemmt.

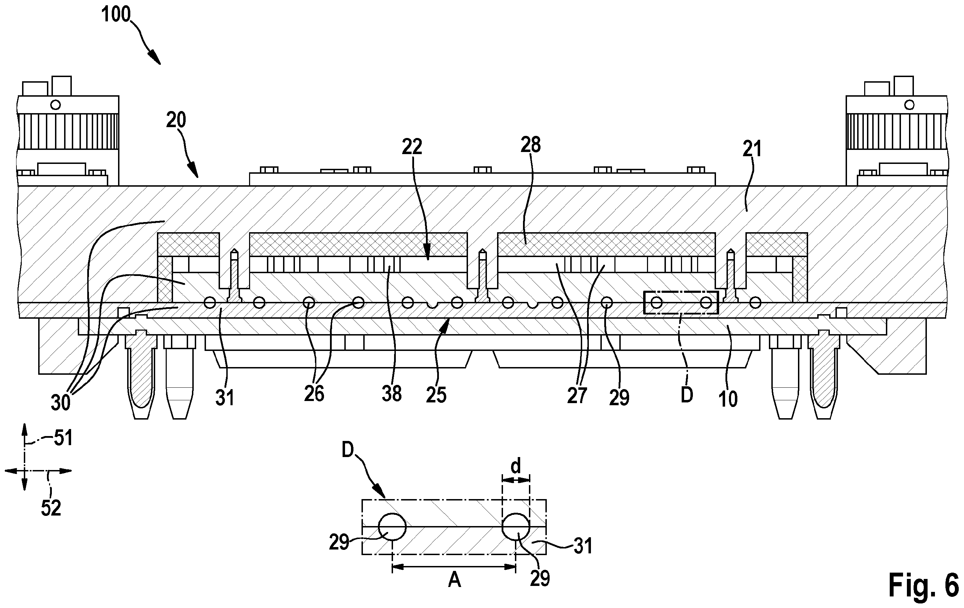

Figur 6 zeigt eine schematische Darstellung der Kaltstempelvorrichtung 100 in einer weiteren Schnittdarstellung, sowie eine Detaildarstellung eines Ausschnitts D. Die Schnittebene wird von einer vertikalen Richtung 51, in welcher das Stempeln stattfindet, und einer horizontalen Richtung 52 senkrecht zur Fliessrichtung des Temperiermediums in der Kammer 22 aufgespannt.

Der Grundkörper 21 des Thermoblocks 20 ist aus Platten 30, 31 aufgebaut. Eine erste Platte 31 umfasst die Wärmeaustauschfläche 25.

Ein Teil des Zulaufkanals 26 wird durch zylinderförmige Kanäle 29 in dem Grundkörper 21 des Thermoblocks 20 gebildet. Die Kanäle 29 werden durch, zum Beispiel gefräste, Ausnehmungen in der ersten Platte 31 und in der benachbarten Platte gebildet.

Die zylinderförmige Kanäle 29 mit rundem oder rechteckigem Querschnitt sind parallel zueinander und parallel zu der Wärmeaustauschfläche 25 angeordnet.

Die zylinderförmige Kanäle 29 weisen einen Durchmesser d von 4mm bis 8mm, bevorzugt zwischen 6mm und 7mm, und einen Abstand A von 20mm bis 35mm, bevorzugt zwischen 35mm und 30mm, auf.

Zumindest der Zulaufkanal 26 weist einen Abstand 44 zur Wärmeaustauschfläche 25 von kleiner 20mm, bevorzugt kleiner 10mm, auf.

An der von der Wärmeaustauschfläche 25 wegweisenden Seite des Rückführkanals 27 ist eine Isolierung 28 aus Kunststoff, bevorzugt PE500 angeordnet. Diese Isolierung 28 verhindert insbesondere, dass das Temperiermedium Wärme von der der Stempelplatte 10 abgewandten Seite des Thermoblocks 20 aufnimmt.

Zwischen den Platten 30 sind Abstandselemente 38 angebracht, zwischen denen der Rückführkanal 27 verläuft.

Die Abstandselemente 38 können einteilig mit einer benachbarten Platte ausführt sein, zum Beispiel als gefräste Erhebungen auf der Platte. Die Abstandselemente 38 sind in dem Fall aus einem Grundkörper gefräst.

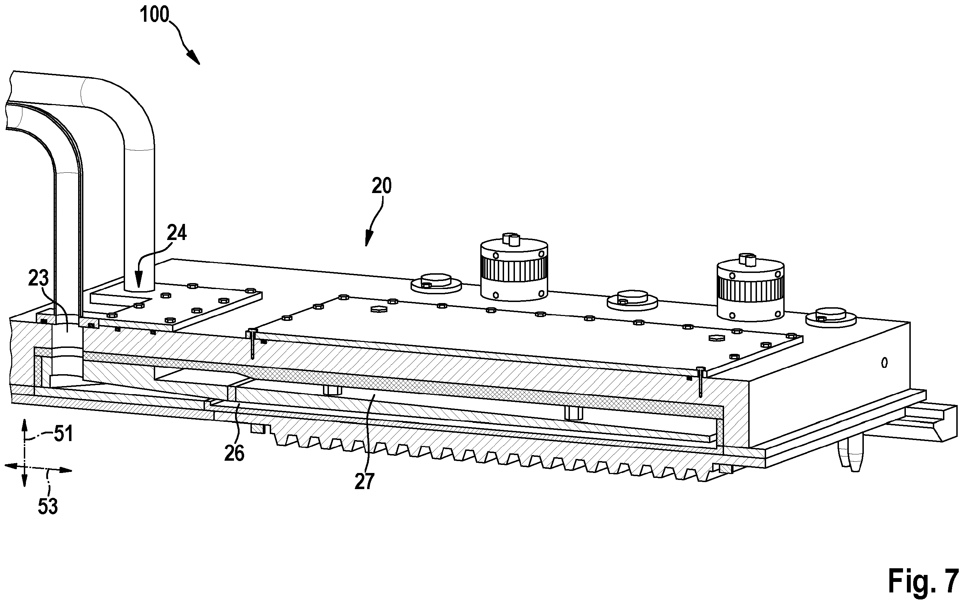

Figur 7 zeigt eine schematische Darstellung einer Kaltstempelvorrichtung 100 in einer perspektivischen Darstellung mit Schnittansicht. Die Schnittebene wird von einer vertikalen Richtung 51, in welcher das Stempeln stattfindet, und einer horizontalen Richtung 53 entlang der Fliessrichtung in dem Zulaufkanal 26 und in dem Rückführkanal 27 aufgespannt.

Der Thermoblock 20 weist eine Einlauföffnung 23, über welche Temperiermedium in den Zulaufkanal 26 geführt werden kann, und eine Auslassöffnung 24, über welche Temperiermedium aus dem Rückführkanal 27 abgeführt werden kann, auf.

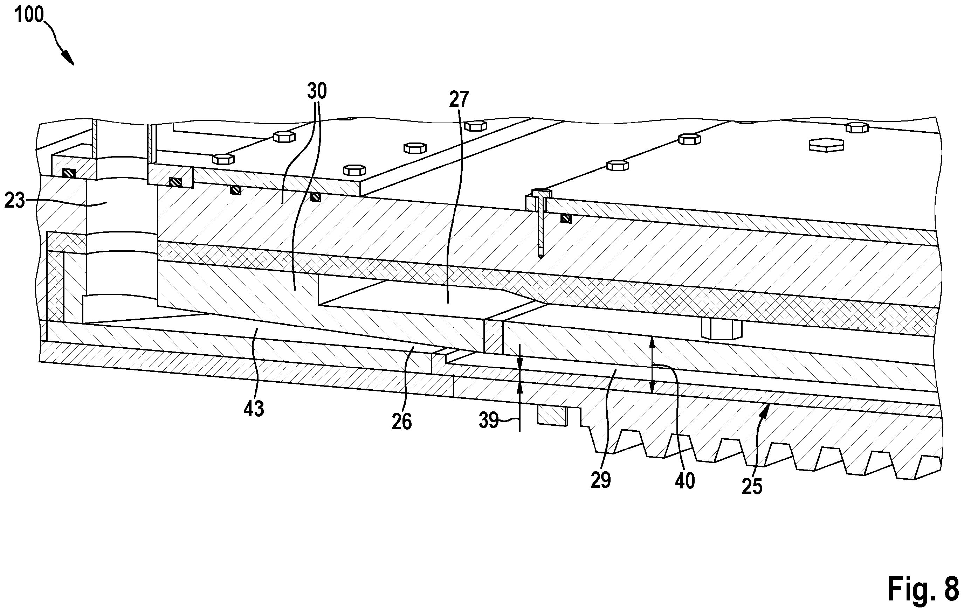

Figur 8 zeigt ein Detail aus Figur 7.

Der Zulaufkanal 26, der über die Einlauföffnung 23 gespeist werden kann, ist näher an der Wärmeaustauschfläche 25 angeordnet als der Rückführkanal 27. Das Temperiermedium strömt von der Einlauföffnung 23 zu der Auslassöffnung 24 (siehe zum Beispiel Figur 7) zunächst durch den Zulaufkanal 26 und dann durch den Rückführkanal 27.

Im Zulaufkanal 26 strömt das Temperiermedium von einer Verteilkammer 43 in zylinderförmige Kanäle 29.

Der Abstand 39 zwischen dem Zulaufkanal 26 und der Wärmeaustauschfläche 25 ist kleiner als der Abstand 40 des Rückführkanals 27 von der Wärmeaustauschfläche 25.

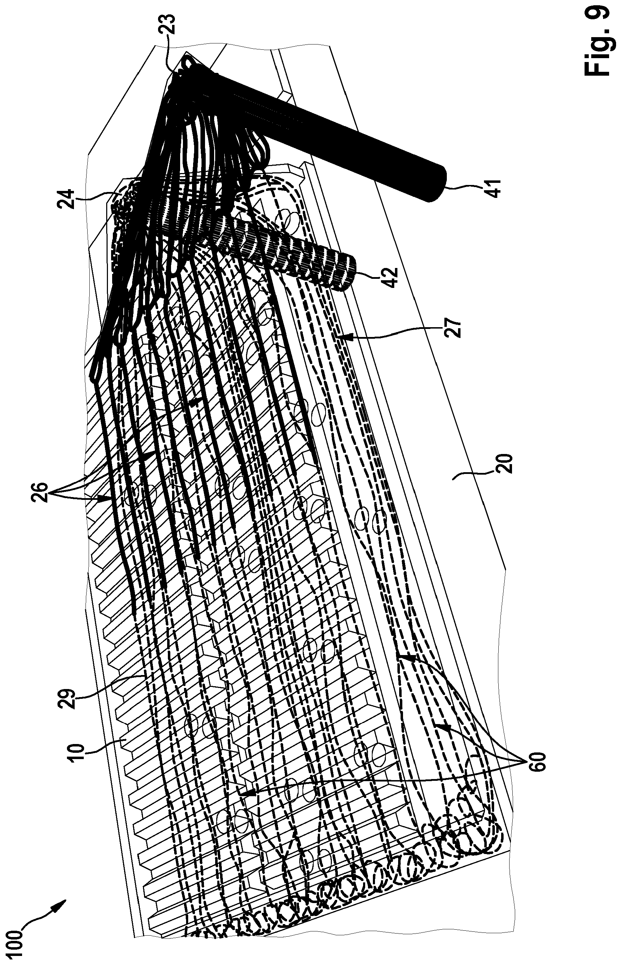

Figur 9 zeigt Flusslinien 60 des Temperiermediums in einer perspektivischen Darstellung der Kaltstempelvorrichtung 100. Der dargestellte Verlauf der Flusslinien 60 ist das Ergebnis einer Simulation mittels eines Computerprogamms.

Das Temperiermedium fliesst aus einer Zuflussleitung 41 durch eine Einlauföffnung 23 in den Zulaufkanal 26. Flussabwärts von der Einlauföffnung 23 verteilt das sich das Temperiermedium auf zylinderförmige Kanäle 29.

Das Temperiermedium weist beim Eintritt in den Thermoblock 20 den grössten Temperaturunterschied zur Umgebung und insbesondere zu der Stempelplatte 10 auf. Auf dem Weg durch die zylinderförmige Kanäle 29 wärmt sich das Temperiermedium auf und strömt dann durch den Rückführkanal 27 zurück zur der Auslassöffnung 24 und in eine Abflussleitung 42. Auf dem Weg durch den Rückführkanal 27 kann sich das Temperiermedium noch weiter aufwärmen und dem durch den Zulaufkanal 26 hinströmenden Temperiermedium und der Stempelplatte 10 weiter Wärme entziehen. Dis Isolierung 28 verhindert den Wärmeaustausch des rückgeführten Temperiermediums mit der Umgebung auf der der Wärmeaustauschfläche 25 abgewandten Seite (siehe Figur 28).

## Patentansprüche

1. Kaltstempelvorrichtung (100) zum Herstellen von geformten Verzehrgütern aus einer Lebensmittelmasse, insbesondere einer Fettmasse, vorzugsweise einer kakaohaltigen und/oder schokoladeartigen Fettmasse,
umfassend
wenigstens eine Stempelplatte (10) mit mindestens einem Stempel (11), und
wenigstens einen Thermoblock (20), der einen Grundkörper (21) mit mindestens einer Kammer (22) zum Durchführen eines, insbesondere flüssigen, Temperiermediums aufweist, wobei der Thermoblock (20) mindestens eine Einlauföffnung (23) und mindestens eine Auslassöffnung (24) aufweist, welche mit der Kammer (22) fluidleitend verbunden sind,
wobei die Stempelplatte (10) eine, bevorzugt ebene, Kontaktfläche (12) umfasst und
die Kontaktfläche (12) in wärmeleitfähigen Kontakt mit einer Wärmeaustauschfläche (25) des Thermoblocks (20) bringbar ist, **dadurch gekennzeichnet, dass**
die Kammer (22) mindestens einen Zulaufkanal (26) und mindestens einen Rückführkanal (27) umfasst, und der Zulaufkanal (26) näher an der Wärmeaustauschfläche (25) angeordnet ist als der Rückführkanal (27), wobei die Kammer (22) so angeordnet ist, dass das Temperiermedium von der Einlauföffnung (23) zu der Auslassöffnung (24) zunächst durch den Zulaufkanal (26) und dann durch den Rückführkanal (27) strömt.

2. Kaltstempelvorrichtung gemäss Anspruch 1, wobei der Zulaufkanal (26) und der Rückführkanal (27) im Wesentlichen parallel zueinander und/oder im Wesentlichen parallel zur Wärmaustauschfläche (25) angeordnet sind.

3. Kaltstempelvorrichtung gemäss einem der vorhergehenden Ansprüche, wobei an der von der Wärmeaustauschfläche (25) wegweisenden Seite der Kammer, insbesondere an der von der Wärmeaustauschfläche (25) wegweisenden Seite des Rückführkanals (27), eine Isolierung (28) angeordnet ist.

4. Kaltstempelvorrichtung gemäss einem der vorhergehenden Ansprüche, wobei zylinderförmige Kanäle (29) in dem Grundkörper (21) des Thermoblocks (20) zumindest teilweise den Zulaufkanal (26) bilden, wobei die zylinderförmige Kanäle (29) insbesondere parallel zueinander und zu der Wärmeaustauschfläche (25) angeordnete sind, und die zylinderförmige Kanäle (29) bevorzugt einen Durchmesser (d) von 4mm bis 8 mm, bevorzugt zwischen 6mm und 7 mm, und einen Abstand (A) von 20mm bis 35mm, bevorzugt zwischen 35mm und 30mm, aufweisen.

5. Kaltstempelvorrichtung gemäss einem der vorhergehenden Ansprüche, wobei der Grundkörper (21) des Thermoblocks (20) aus Platten (30, 31) aufgebaut ist und wobei insbesondere die erste Platte (31) die Wärmeaustauschfläche (25) umfasst.

6. Kaltstempelvorrichtung gemäss einem der vorhergehenden Ansprüche, wobei die Kaltstempelvorrichtung weiter eine Pumpvorrichtung zum Fördern von Temperiermedium umfasst.

7. Kaltstempelvorrichtung gemäss Anspruch einem der vorhergehenden Ansprüche, wobei die Stempelplatte (10) aus einer Wartungsposition, in welcher die Stempelplatte (10) nicht in wärmeleitfähigem Kontakt mit dem Thermoblock (20) steht, in eine Betriebssposition, in welcher die Stempelplatte (10) in wärmeleitfähigem Kontakt mit dem Thermoblock (20) steht, bewegbar, insbesondere auf Einschubleisten (33) schiebbar, ist.

8. Kaltstempelvorrichtung gemäss Anspruch 7 wobei die Stempelplatte (10) in der Betriebsposition mit Spannmuttern (34) fixierbar ist, wobei insbesondere die Spannmuttern (34) mit an Einschubleisten (33) angeordneten Schraubenelementen (35) zusammenwirken.

9. Kaltstempelvorrichtung gemäss einem der vorhergehenden Ansprüche, wobei zwischen Kontaktfläche (12) und Thermoblock (20) eine Wärmeleitplatte (50) angeordnet ist, die bevorzugt an der Kontaktfläche (12) angeordnet, insbesondere befestigt ist.

10. Kaltstempelvorrichtung gemäss einem der vorhergehenden Ansprüche, wobei die Stempelplatte (10) mit dem mindestens einen Stempel (11) einstückig und bevorzugt aus Metall gefertigt ist.

11. Kaltstempelvorrichtung gemäss einem der vorhergehenden Ansprüche umfassend eine Mehrzahl von Stempelplatten (10), bevorzugt mit unterschiedlichen Topographien für verschiedene zu erzielenden Formen, von denen jeweils eine in eine Betriebsposition bringbar ist.

12. Anlage (200) zum Herstellen von geformten Verzehrgütern aus einer Lebensmittelmasse, insbesondere einer Fettmasse, vorzugsweise einer kakaohaltigen und/oder schokoladeartigen Fettmasse,
umfassend eine Kaltstempelvorrichtung (100) gemäss einem der vorhergehenden Ansprüche und eine Aufnahme (101) für mindestens eine Form mit mindestens einer Alveole zum Einfüllen von fliessfähiger Lebensmittelmasse.

13. Verfahren zur Inbetriebnahme einer Kaltstempelvorrichtung, umfassend mindestens eine Stempelplatte (10) mit Kontaktfläche (12) und mindestens einen Thermoblock (20) mit einer Wärmeaustauschfläche (25), gemäss einem der vorhergehenden Ansprüche 1-11, wobei das Verfahren die folgende Schritte umfasst:
- Einführen der Stempelplatte (10) in eine an dem Thermoblock angebrachten Aufnahme, insbesondere Einschieben der Stempelplatte (10) auf Einschubleisten (33);
- Herstellen eines wärmeleitfähigen Kontaktes zwischen der Kontaktfläche (12) und der Wärmeaustauschfläche (25) .

14. Verfahren gemäss Anspruch 13, wobei die Stempelplatte (10) mit Spannmuttern (34) an dem Thermoblock (20) fixiert wird, wobei die Spannmuttern (34) insbesondere mit an Einschubleisten (33) angebrachten Schraubenelementen (35) zusammenwirkt, sodass die Einschubleisten (33), die bevorzugt dem Grundkörper (21) des Thermoblocks (20) befestigt sind, in Richtung des Grundkörpers (21) gezogen werden, sodass die Stempelplatte (10) zwischen Einschubleisten (33) und Grundkörper (21) einklemmt.

15. Verfahren zum Betreiben einer Kaltstempelvorrichtung (100), umfassend mindestens eine Stempelplatte (10) mit einer Kontaktfläche (12) und einen Thermoblock (20) mit mindestens einer Kammer (22) zum Durchleiten von Temperiermedium und einer (25) Wärmeaustauschfläche, insbesondere gemäss einem der vorhergehenden Ansprüche 1-11, wobei das Verfahren die folgende Schritte umfasst:
- Leiten eines Temperiermediums durch die mindestens eine Kammer (22), wobei das Temperiermedium zunächst durch einen Zulaufkanal (26) der Kammer (22) geführt wird und anschliessend durch einen Rückführkanal (27) der Kammer (22), wobei der Zulaufkanal (26) in einem Abstand zu der Wärmeaustauschfläche (25) angeordnet ist, der kleiner ist als der Abstand des Rückführkanals (27) von der Wärmeaustauschfläche (25),
- insbesondere Austausch von Wärme zwischen der Wärmeaustauschfläche (25) und der Kontaktfläche (12).

## Claims

1. A cold stamping device (100) for producing shaped consumable goods from a food mass, in particular a fat mass, preferably a cocoa-containing and/or chocolate-like fat mass,
comprising
at least one stamp plate (10) with at least one stamp (11), and
at least one thermal block (20) which has a main body (21) with at least one chamber (22) for conducting a, in particular liquid, tempering medium,
the thermal block (20) having at least one inlet opening (23) and at least one outlet opening (24), which are connected to the chamber (22) in a fluid-conducting manner, the stamp plate (10) comprising a preferably planar contact surface (12), and
the contact surface (12) can be brought into heat-conducting contact with a heat exchange surface (25) of the thermal block (20), **characterized in that**
the chamber (22) comprises at least one inflow channel (26) and at least one return channel (27), and the inflow channel (26) is arranged closer to the heat exchange surface (25) than the return channel (27), the chamber (22) is arranged such that the tempering medium flows from the inlet opening (23) to the outlet opening (24) first through the feed channel (26) and then through the return channel (27).

2. The cold stamping device according to claim 1, wherein the feed channel (26) and the return channel (27) are arranged essentially parallel to one another and/or essentially parallel to the heat exchange surface (25).

3. The cold stamping device according to one of the preceding claims, wherein an insulation (28) is arranged on the side of the chamber pointing away from the heat exchange surface (25), in particular on the side of the return channel (27) pointing away from the heat exchange surface (25).

4. The cold stamping device according to one of the preceding claims, wherein cylindrical channels (29) in the main body (21) of the thermal block (20) at least partially form the feed channel (26), wherein the cylindrical channels (29) are arranged in particular parallel to one another and to the heat exchange surface (25), and the cylindrical channels (29) preferably have a diameter (d) of 4 mm to 8 mm, preferably between 6 mm and 7 mm, and a spacing (A) of 20 mm to 35 mm, preferably between 35 mm and 30 mm.

5. The cold stamping device according to one of the preceding claims, wherein the main body (21) of the thermal block (20) is constructed from plates (30, 31) and wherein in particular the first plate (31) comprises the heat exchange surface (25).

6. The cold stamping device according to one of the preceding claims, wherein the cold stamping device further comprises a pumping device for conveying tempering medium.

7. The cold stamping device according to one of the preceding claims, wherein the stamp plate (10) is movable from a maintenance position, in which the stamp plate (10) is not in heat-conducting contact with the thermal block (2 0), into an operating position, in which the stamp plate (10) is in thermally conductive contact with the thermal block (20), in particular on insertion rails (33).

8. The cold stamping device according to claim 7, wherein the stamp plate (10) can be fixed in the operating position by means of clamping nuts (34), wherein in particular the clamping nuts (34) cooperate with screw elements (35) arranged on insertion rails (33).

9. The cold stamping device according to one of the preceding claims, wherein a heat-conducting plate (50) is arranged between the contact surface (12) and the thermal block (20), preferably arranged, in particular fastened, on the contact surface (12).

10. The cold stamping device according to one of the preceding claims, wherein the stamp plate (10) with the at least one stamp (11) is made in one piece and preferably made of metal.

11. The cold stamping device according to one of the preceding claims, comprising a plurality of stamp plates (10), preferably with different topographies for different forms to be achieved, of which one can be brought into an operating position at a time.

12. A plant (200) for producing molded comestible products from a food mass, in particular a fat mass, preferably a cocoa-containing and/or chocolate-like fat mass, comprising a cold stamping device (100) according to one of the preceding claims and a holder (101) for at least one mold having at least one cavity for filling with flowable food mass.

13. A method for putting into operation a cold stamping device, comprising at least one stamp plate (10) with a contact surface (12) and at least one thermal block (20) with a heat exchange surface (25), according to one of the preceding claims 1-11, the method comprising the following steps:
inserting the stamp plate (10) into a receiver attached to the thermal block, in particular pushing the stamp plate (10) onto insertion rails (33);
establishing a heat-conducting contact between the contact surface (12) and the heat exchange surface (25).

14. The method according to claim 13, wherein the stamp plate (10) is fixed to the thermal block (20) by clamping nuts (34), wherein the clamping nuts (34) in particular interact with screw elements (35) attached to insertion rails (33), so that the insertion rails (33), which are preferably attached to the main body (21) of the thermal block (20), are pulled in the direction of the main body (21), so that the stamp plate (10) is clamped between the insertion rails (33) and the main body (21).

15. A method for operating a cold stamping device (100), comprising at least one stamp plate (10) with a contact surface (12) and a thermal block (20) with at least one chamber (22) for conducting a tempering medium and one (25) heat exchange surface, in particular according to one of the preceding claims 1-11, the method comprising the following steps:
- passing a tempering medium through the at least one chamber (22), the tempering medium first being passed through a feed channel (26) of the chamber (22) and then through a return channel (27) of the chamber (22), the feed channel (26) being arranged at a distance from the heat exchange surface (25) which is smaller than the distance of the return channel (27) from the heat exchange surface (25),
- in particular, exchange of heat between the heat exchange surface (25) and the contact surface (12).

## Revendications

1. Dispositif d'estampage à froid (100) pour la production de produits consommables façonnés à partir d'une masse alimentaire, en particulier d'une masse grasse, de préférence d'une masse grasse contenant du cacao et/ou de type chocolat,
comprenant
au moins une plaque de poinçon (10) comportant au moins un poinçon (11), et
au moins un bloc thermique (20) ayant un corps principal (21) avec au moins une chambre (22) pour conduire un milieux de tempérage, en particulier un milieux de tempérage liquide,
le bloc thermique (20) comportant au moins une ouverture d'entrée (23) et au moins une ouverture de sortie (24), qui sont reliées à la chambre (22) de manière à conduire le fluide,
la plaque de poinçon (10) comprenant une surface de contact (12) de préférence plane, et
la surface de contact (12) peut être mise en contact avec une surface d'échange thermique (25) du bloc thermique (20) de manière à conduire la chaleur, **caractérisé en ce que** la chambre (22) comprend au moins un canal d'afflux (26) et au moins un canal de retour (27), et le canal d'afflux (26) est disposé plus près de la surface d'échange thermique (25) que le canal de retour (27), la chambre (22) est disposée de telle sorte que le fluide de tempérage s'écoule de l'ouverture d'entrée (23) à l'ouverture de sortie (24) d'abord à travers le canal d'afflux (26) puis à travers le canal de retour (27).

2. Dispositif d'estampage à froid selon la revendication 1, dans lequel le canal d'afflux (26) et le canal de retour (27) sont disposés essentiellement parallèlement l'un à l'autre et/ou essentiellement parallèlement à la surface d'échange thermique (25).

3. Dispositif d'estampage à froid selon l'une des revendications précédentes, dans lequel une isolation (28) est disposée sur le côté de la Chambre orienté à l'opposé de la surface d'échange thermique (25), en particulier sur le côté du canal de retour (27) orienté à l'opposé de la surface d'échange thermique (25).

4. Dispositif estampage à froid selon l'une des revendications précédentes, dans lequel des canaux cylindriques (29) dans le corps principal (21) du bloc thermique (20) forment au moins partiellement le canal d'afflux (26), dans lequel les canaux cylindriques (29) sont disposés en particulier parallèlement les uns aux autres et à la surface d'échange thermique (25), et les canaux cylindriques (29) ont de préférence un diamètre (d) de 4 mm à 8 mm, de préférence entre 6 mm et 7 mm, et un espacement (A) de 20 mm à 35 mm, de préférence entre 35 mm et 30 mm.

5. Dispositif d'estampage à froid selon l'une des revendications précédentes, dans lequel le corps principal (21) du bloc thermique (20) est construit à partir de plaques (30, 31) et dans lequel en particulier la première plaque (31) comprend la surface d'échange thermique (25).

6. Dispositif d'estampage à froid selon l'une des revendications précédentes, dans lequel le dispositif d'estampage à froid comprend en outre un dispositif de pompage pour acheminer le milieu de tempérage.

7. Le dispositif d'estampage à froid selon l'une des revendications précédentes, dans lequel la plaque d'estampage (10) est mobile d'une position de maintenance, dans laquelle la plaque d'estampage (10) n'est pas en contact avec le bloc thermique (2 0) de manière à conduire la chaleur, à une position de fonctionnement, dans laquelle la plaque d'estampage (10) est en contact avec le bloc thermique (20) de manière à conduire la chaleur, en particulier sur des rails d'insertion (33).

8. Dispositif d'estampage à froid selon la revendication 7, dans lequel la plaque de poinçon (10) peut être fixée dans la position de fonctionnement au moyen d'écrous de serrage (34), les écrous de serrage (34) coopérant notamment avec des éléments de vissage (35) disposés sur les rails d'insertion (33).

9. Dispositif d'estampage à froid selon l'une des revendications précédentes, dans lequel une plaque conductrice de chaleur (50) est disposée entre la surface de contact (12) et le bloc thermique (20), de préférence disposée, en particulier fixée, sur la surface de contact (12).

10. Dispositif d'estampage à froid selon l'une des revendications précédentes, dans lequel la plaque de poinçon (10) avec le au moins un poinçon (11) est réalisée en une seule pièce et de préférence en métal.

11. Dispositif d'estampage à froid selon l'une des revendications précédentes, comprenant plusieurs plaques de poinçon (10), de préférence avec différentes topographies pour différentes formes à réaliser, dont une à la fois peuvent être amenée dans une position de fonctionnement.

12. Installation (200) pour la fabrication de produits comestibles moulés à partir d'une masse alimentaire, en particulier d'une masse grasse, de préférence d'une masse grasse contenant du cacao et/ou de type chocolat,
comprenant un dispositif d'estampage à froid (100) selon l'une des revendications précédentes et un support (101) pour au moins un moule ayant au moins une cavité pour le remplissage avec de la masse alimentaire fluide.

13. Procédé de mise en fonctionnement d'un dispositif d'estampage à froid, comprenant au moins une plaque d'estampage (10) avec une surface de contact (12) et au moins un bloc thermique (20) avec une surface d'échange thermique (25), selon l'une des revendications précédentes 1-11, le procédé comprenant les étapes suivantes :
insérer la plaque de poinçon (10) dans un récepteur fixé au bloc thermique, notamment en poussant la plaque de poinçon (10) sur des rails d'insertion (33) ;
établir un contact entre la surface de contact (12) et la surface d'échange thermique (25) de manière à conduire la chaleur.

14. Procédé selon la revendication 13, dans lequel la plaque d'estampage (10) est fixée au bloc thermique (20) par des écrous de serrage (34), les écrous de serrage (34) interagissant notamment avec des éléments de vissage (35) fixés aux rails d'insertion (33), de sorte que les rails d'insertion (33), qui sont de préférence fixés au corps principal (21) du bloc thermique (20), sont tirés en direction du corps principal (21), de sorte que la plaque d'estampage (10) est pincée entre les rails d'insertion (33) et le corps principal (21).

15. Méthode de fonctionnement d'un dispositif d'estampage à froid (100), comprenant au moins une plaque d'estampage (10) avec une surface de contact (12) et un bloc thermique (20) avec au moins une chambre (22) de conduite d'un milieu tempérage et une surface d'échange thermique (25), en particulier selon l'une des revendications précédentes 1-11, la méthode comprenant les étapes suivantes :
- passage d'un milieux de tempérage dans la au moins une chambre (22), le milieux de tempérage passant d'abord par un canal d'afflux (26) de la chambre (22) puis par un canal de retour (27) de la chambre (22), le canal d'afflux (26) étant disposé à une distance de la surface d'échange thermique (25) inférieure à la distance du canal de retour (27) par rapport à la surface d'échange thermique (25),
- en particulier, l'échange thermique entre la surface d'échange thermique (25) et la surface de contact (12).
